# FASCICULE DE BREVET EUROPEEN

(11) **EP 1 692 642 B1**
(45) Date de publication et mention de la délivrance du brevet: **07.03.2007**
(21) Numéro de dépôt: 04804556.1
(22) Date de dépôt: 23.11.2004
(51) Int. Cl.: G06K 19/077

(54) **DOCUMENT SECURISE A PUCE SANS CONTACT AVEC MASQUAGE DES DONNEES**
SICHERHEITSDOKUMENT MIT EINEM KONTAKTLOSEN CHIP MIT DATENMASKIERUNG
SECURITY DOCUMENT HAVING A CONTACTLESS CHIP WITH DATA MASKING

(30) Priorité: 12.12.2003 FR 0314597
(43) Date de publication de la demande: 23.08.2006
(73) Titulaire: THALES, 92200 Neuilly sur Seine (FR)
(72) Inventeur: ROBIN, Philippe, F-94117 ARCUEIL Cedex (FR); MISSONGE, Elsa, F-94117 ARCUEIL Cedex (FR); ZENONI, Pascal, F-94117 ARCUEIL Cedex (FR); LEBOURGEOIS, Richard, F-94117 ARCUEIL Cedex (FR)
(74) Mandataire: Chaverneff, Vladimir
(86) Numéro de dépôt international: PCT/EP2004/053063
(87) Numéro de publication internationale: WO 2005/066890

(56) Documents cités:
- DE-A- 19 721 057
- FR-A- 2 663 445
- FR-A- 2 824 018

## Description

La présente invention concerne un document sécurisé à puce sans contact avec masquage des données.

De plus en plus de documents sécurisés, de type documents d'identité (passeport, carte d'identité, etc.), comportent un circuit électronique avec lecture sans contact. Un tel document sécurisé est décrit dans le document FR 2 824 018. Le circuit électronique est formé d'un module électronique, ou puce, connecté à une antenne, inductive ou capacitive. Ce type de dispositif permet par exemple de stocker sous forme numérique des données personnelles d'état civil et biométriques ainsi que des données administratives. Lorsque le document sécurisé doit être contrôlé pour en vérifier la validité par exemple, les données stockées sont lues par un appareil récepteur, ou lecteur, au moyen d'un couplage électromagnétique à distance entre le circuit électronique de la carte, autrement appelé transpondeur, et le lecteur. L'utilisation des technologies sans contact apporte des avantages significatifs en terme de durée de vie et d'ergonomie. Cependant, il est important d'assurer au citoyen que son document d'identité ne peut pas être lu à son insu. En effet, la technologie sans contact sera d'autant mieux acceptée que l'autorisation de lecture des données stockées dans le document reste sous le contrôle du porteur du document.

L'objet de la présente invention a pour but de restaurer le geste volontaire du citoyen pour autoriser l'accès aux données d'un document sécurisé à puce sans contact. Pour cela, le document sécurisé comprend un élément de masquage, passif, destiné à perturber le fonctionnement du mécanisme de couplage sans contact tant que le porteur du document n'a pas effectué ce geste volontaire d'autorisation d'accès au document.

Plus précisément, l'invention propose un document sécurisé à puce sans contact comprenant un transpondeur formé d'un module électronique connecté à une antenne disposée sur une surface donnée d'une première partie du document, ledit transpondeur étant destiné à communiquer grâce à un couplage électromagnétique à distance avec un lecteur, caractérisé en ce que le document sécurisé comprend en outre un élément de masquage passif de ladite antenne, supporté par une seconde partie du document, mobile par rapport à ladite première partie, ledit élément de masquage étant apte à perturber le couplage entre le transpondeur et le lecteur pour rendre impossible la lecture du document dans une position prédéterminée de ladite seconde partie, correspondant à une position dite fermée du document.

L'emploi d'un élément passif pour le masquage de l'antenne permet en outre une réalisation particulièrement simple et peu coûteuse.

D'autres avantages et caractéristiques apparaîtront plus clairement à la lecture de la description qui suit, illustrée par les figures annexées qui représentent :
- Les figure 1A, 1B, 1C, des schémas électroniques illustrant le principe de communication entre le transpondeur d'un document à puce sans contact et un lecteur ;
- La figure 2, un exemple de réalisation d'un document sécurisé selon l'invention, de type passeport ;
- La figure 3, un exemple de réalisation d'un document sécurisé selon l'invention, de type carte avec étui de protection.

Sur ces figures, les éléments identiques sont référencés par les mêmes repères.

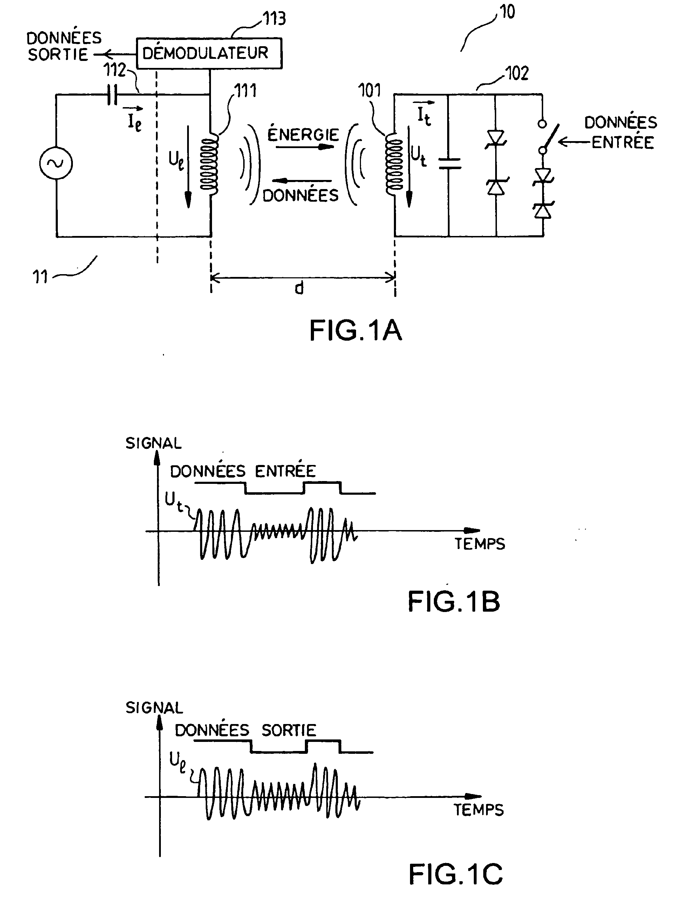

Les figures 1A à 1C illustrent le principe de communication entre le transpondeur 10 d'un document sécurisé à puce sans contact et un lecteur 11, le transpondeur et le lecteur étant représentés par des schémas électriques équivalents.

Le transpondeur 10 comprend classiquement une antenne, dans cet exemple une antenne inductive 101, par exemple en fil bobiné, ou réalisée par sérigraphie d'encre conductrice ou par gravure d'une couche de cuivre par exemple, connectée à un module électronique, ou puce, 102. La communication avec le lecteur 11 se fait grâce à un couplage électromagnétique à distance. Ce couplage s'effectue en mode lecture ou en mode lecture/écriture et la transmission des données s'effectue par radiofréquences ou hyperfréquences. La figure 1A illustre la communication des données du transpondeur vers le lecteur. Classiquement, le courant électrique qui parcourt l'antenne 111 du lecteur alimentée par un circuit 112 entraîne l'apparition d'un flux magnétique. A une distance d, la variation instantanée de ce flux magnétique produit l'apparition d'une différence de potentiel Ut induite aux bornes de l'élément conducteur que forme l'antenne 101 du transpondeur, permettant ainsi la télé alimentation du module électronique 102 auquel est connectée l'antenne 101. Après accord du transpondeur sur la fréquence porteuse du lecteur, l'ordre de grandeur de la tension utilisable est de quelques volts typiquement. Lorsque le lecteur souhaite disposer des données d'entrée disponibles dans le transpondeur, il fournit une porteuse non modulée à celui-ci, de façon à ce qu'il soit toujours télé alimenté. Selon un mode de transmission largement utilisé, le transpondeur module en tout ou rien la charge résistive équivalente qu'il représente. En effectuant cela, il modifie la consommation d'énergie qu'il représente dans le champ magnétique et, du fait du couplage magnétique existant entre le transpondeur et le lecteur, tend à modifier la valeur du courant Iℓ circulant dans le circuit de l'antenne 111 du lecteur. Un démodulateur 113 permet à partie de la tension Uℓ aux bornes de l'antenne 111 de récupérer les données en sortie. Sur les figures 1B et 1C sont représentées en fonction du temps respectivement l'allure de la tension Ut aux bornes de l'antenne 101 modulée en fonction des données d'entrée et la différence de potentiel Uℓ en résultant aux bornes de l'antenne 111 du lecteur, ainsi que l'allure du signal de sortie après démodulation.

La qualité et la quantité du transfert d'énergie dépendent des fréquences sur lesquelles sont accordés les deux circuits d'antennes. Par exemple, la fréquence 13,56 MHz est largement utilisée.

Les dispositifs mettant en oeuvre des puces sans contact comme les cartes à puces sans contact ou autres documents sécurisés présentent des avantages importants en terme d'ergonomie et de durée de vie et sont amenés à se développer. Une large littérature existe dans ce domaine et les procédés de réalisation sont bien connus de l'état de l'art (voir par exemple la demande de brevet FR 2787609 sur un procédé de fabrication de carte à puce sans contact).

Cependant, lorsque les documents sécurisés contiennent des informations personnelles de type d'état civil et biométriques, comme un passeport ou une carte d'identité par exemple, le porteur du document peut être en droit de s'assurer que ces données ne vont pas pouvoir être lues à son insu.

L'invention propose un document sécurisé avec masquage des données permettant au porteur du document de restaurer le geste volontaire pour autoriser la lecture des documents.

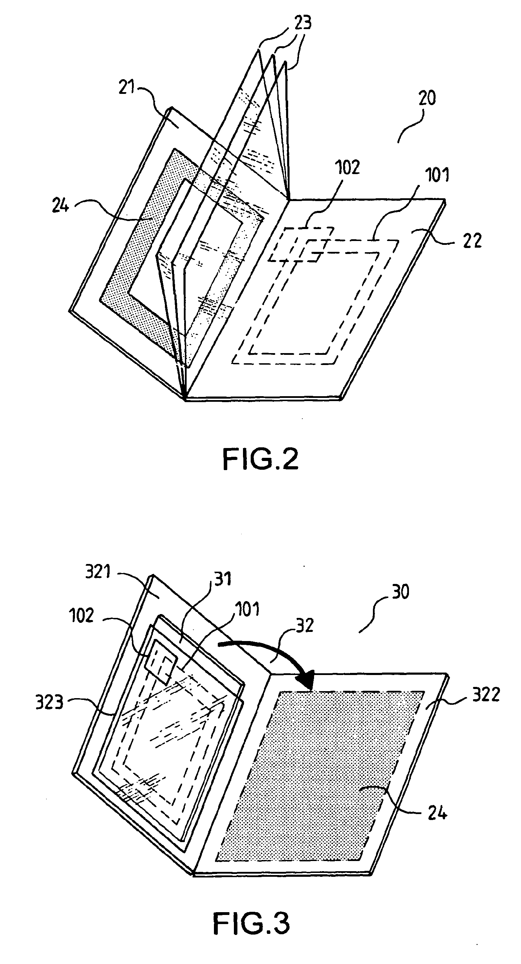

Les figures 2 et 3 en illustrent deux exemples non limitatifs. Le premier exemple est celui d'un livret 20 de type passeport, comprenant deux couvertures recto et verso (21, 22) et un ensemble de feuillets mobiles 23. Le second exemple est celui d'une carte protégée par un étui (30).

Selon l'invention, le document sécurisé à puce sans contact comprend un transpondeur formé d'un module électronique 102 connecté à une antenne 101. L'antenne, classiquement en fil bobiné, est disposée sur une surface donnée d'une première partie du document, par exemple une des couvertures 22 du livret 20. Le transpondeur est destiné à communiquer grâce à un couplage électromagnétique à distance avec un lecteur, non représenté sur la figure 2. Selon l'invention, le document sécurisé comprend en outre un élément de masquage passif 24 de l'antenne, supporté par une seconde partie du document (la couverture 21 du livret dans l'exemple de la figure 2), cette seconde partie étant mobile par rapport à la première partie. L'élément de masquage est un élément passif, apte à perturber le couplage entre le transpondeur et le lecteur pour rendre impossible la lecture du document dans une position prédéterminée de ladite seconde partie, correspondant à une position dite fermée du document. Ainsi dans l'exemple de la figure 2, l'élément de masquage est choisi pour rendre la lecture impossible lorsque le livret est refermé.

L'élément de masquage passif peut être formé de tout matériau apte à perturber le couplage, par exemple un matériau métallique ou un matériau magnétique, de façon suffisante pour empêcher la lecture. En effet, la qualité et la quantité du transfert d'énergie entre le lecteur et le transpondeur dépendant des fréquences sur lesquelles sont accordés les deux circuits d'antenne, du coefficient de couplage, ainsi que des facteurs de qualité des circuits accordés du lecteur et du transpondeur, toute perturbation d'origine électrique ou magnétique du circuit d'antenne du transpondeur va entraîner une perturbation du couplage.

La déposante a ainsi démontré qu'avec un élément de masquage passif comprenant une couche mince métallique de forme donnée, agencée de telle sorte qu'en position fermée du document, ladite couche se trouve en regard de la surface couverte par l'antenne, le couplage diminue très fortement au point que le document se trouve protégé de toute lecture intempestive. La déposante a même observé qu'il n'était pas nécessaire que la totalité de la surface couverte par l'antenne se trouve en regard de la couche métallique. Ainsi, de très bons résultats ont été obtenus avec une couche mince métallique dont la forme est telle qu'en position fermée du document, la couche se trouve en regard de la zone périphérique de la surface couverte par l'antenne, ou du moins d'une grande partie de cette zone. Ainsi dans l'exemple de la figure 2, l'élément de masquage passif 24 est formé d'une couche mince métallique dont la forme est sensiblement celle d'un cadre qui, lorsque le livret est fermé, se trouve en regard de la zone périphérique de l'antenne 101 du transpondeur.

Selon une variante, la couche mince est formée à partir d'une feuille de matériau métallique, par exemple une feuille d'aluminium. La couche mince peut également être formée au moyen d'une pâte conductrice sérigraphiée sur la partie du document destinée à la recevoir, dans cet exemple la couverture 21 du livret.

La déposante a observé dans l'exemple de réalisation de la figure 2 que les résultats de masquage de l'antenne étaient indépendants de la position relative du lecteur par rapport à l'élément de masquage. Ainsi, la lecture du document se trouve inhibée de la même façon lorsque le document est fermé et qu'on tente de le lire en approchant le lecteur du côté de la couverture 21 qui supporte l'élément de masquage ou du côté de la couverture 22 qui supporte le transpondeur. De ce fait, dans le cas du livret, l'élément de masquage passif peut être supporté indifféremment par l'une des couvertures, ou l'un des feuillets, la seule contrainte étant qu'il soit porté par un élément du livret distinct de celui qui supporte le transpondeur.

Par ailleurs, la couche mince métallique peut être directement supportée par la partie du document destinée à la recevoir ou formée sur un support qui sera par exemple collé sur ladite partie du document. Ainsi, il est par exemple possible de coller sur une couverture ou un feuillet des passeports existants, une étiquette sur laquelle est sérigraphiée l'élément de masquage, ce qui permet de façon simple et peu coûteuse de protéger contre la lecture intempestive les documents sécurisés existants.

La figure 3 représente un autre exemple de document sécurisé à puce sans contact équipé d'un élément de masquage conformément à l'invention. Dans cet exemple, le document 30 est formé d'une carte 31, par exemple d'une carte d'identité, et d'un étui de protection 32. L'antenne 101 du transpondeur est supportée par la carte et l'élément de masquage passif 24 est supporté par l'étui, de telle sorte que la lecture de la carte soit rendue impossible lorsque celle-ci est rangée dans l'étui. Par exemple, l'étui 32 comprend deux volets 321, 322 rabattables l'un sur l'autre, un premier volet 321 avec un logement 323 par exemple en plastique, dans lequel la carte est destinée à être insérée, le second volet 322 supportant l'élément de masquage passif, de telle sorte que la lecture de la carte soit rendue impossible lorsque les volets de l'étui sont rabattus l'un sur l'autre.

Bien entendu, ces exemples de réalisation ne sont pas limitatifs.

L'utilisation d'un matériau magnétique à pertes (et non un aimant permanent) est également possible pour réaliser l'élément de masquage passif. Il peut s'agir par exemple de composites de ferrites, sous formes de feuilles ou déposés par impression sur la seconde partie du document sécurisé, mobile par rapport à la première partie supportant le transpondeur.

## Revendications

1. Document sécurisé (20, 30) à puce sans contact comprenant un transpondeur (10) formé d'un module électronique (102) connecté à une antenne (101) disposée sur une surface donnée d'une première partie (22, 31) du document, ledit transpondeur étant destiné à communiquer grâce à un couplage électromagnétique à distance avec un lecteur, **caractérisé en ce que** le document sécurisé comprend en outre un élément de masquage passif (24) de ladite antenne, supporté par une seconde partie (21, 322) du document, mobile par rapport à ladite première partie, ledit élément de masquage étant apte à perturber le couplage entre le transpondeur et le lecteur pour rendre impossible la lecture du document dans une position prédéterminée de ladite seconde partie, correspondant à une position dite fermée du document.

2. Document sécurisé selon la revendication 1, dans lequel l'élément de masquage passif (24) comprend une couche mince métallique de forme donnée, agencée de telle sorte qu'en position fermée du document, ladite couche se trouve en regard de tout ou partie de la surface couverte par l'antenne.

3. Document sécurisé selon la revendication 2, dans lequel la forme de ladite couche est telle qu'en position fermée du document, ladite couche se trouve en regard de tout ou partie de la zone périphérique de la surface couverte par l'antenne.

4. Document sécurisé selon l'une des revendications 2 ou 3, dans lequel ladite couche mince est formée à partir d'une feuille de matériau métallique.

5. Document sécurisé selon la revendication 4, dans lequel ladite feuille est une feuille d'aluminium.

6. Document sécurisé selon l'une des revendications 2 ou 3, dans lequel ladite couche mince est formée au moyen d'une pâte conductrice sérigraphiée.

7. Document sécurisé selon l'une des revendications 2 à 6, dans lequel ladite couche mince est directement supportée par ladite seconde partie du document.

8. Document sécurisé selon l'une des revendications 2 à 6, dans lequel ladite couche mince est formée sur un support collé sur ladite seconde partie du document.

9. Document sécurisé selon la revendication 1, dans lequel l'élément de masquage passif est formé à partir d'un matériau magnétique à pertes.

10. Document sécurisé selon la revendication 9, dans lequel ledit matériau est un composite de ferrite.

11. Document sécurisé (20) selon l'une des revendications précédentes, formé d'un livret de type passeport, avec un ensemble d'éléments reliés les uns aux autres dont une couverture recto (21), une couverture verso (22) et un ou plusieurs feuillets mobiles (23), dans lequel la première partie et la seconde partie du document, supportant respectivement l'antenne (101) et l'élément de masquage passif (24), sont formés de deux éléments distincts du document, de telle sorte que la lecture du document soit rendue impossible en position fermée du livret.

12. Document sécurisé selon la revendication 11, dans lequel l'antenne et l'élément de masquage sont supportés respectivement par chacune des couvertures du livret.

13. Document sécurisé selon la revendication 11, dans lequel l'antenne et l'élément de masquage sont supportés respectivement par une desdites couvertures et un des feuillets mobiles.

14. Document sécurisé selon la revendication 11, dans lequel l'antenne et l'élément de masquage sont supportés respectivement par l'un des feuillets mobiles et l'une des couvertures ou l'un desdits autres feuillets mobiles.

15. Document sécurisé (30) selon l'une des revendications 1 à 10, formé d'une carte (31) et d'un étui de protection (32), dans lequel l'antenne (101) du transpondeur étant supportée par ladite carte formant ledit premier élément, l'élément de masquage passif (24) est supporté par l'étui formant ledit second élément, de telle sorte que la lecture de la carte soit rendue impossible lorsque celle-ci est rangée dans l'étui.

16. Document sécurisé selon la revendication 15, dans lequel l'étui comprend deux volets (321, 322) rabattables l'un sur l'autre, un premier volet (321) avec un logement (323) dans lequel la carte (31) est destinée à être insérée, le second volet (322) supportant l'élément de masquage passif (24), de telle sorte que la lecture de la carte soit rendue impossible lorsque les volets de l'étui sont rabattus l'un sur l'autre.

## Claims

1. Security document (20, 30) having a contactless chip comprising a transponder (10) comprised of an electronic module (102) connected to an antenna (101) placed on a given surface of a first part (22, 31) of the document, said transponder being designed to communicate remotely via electromagnetic coupling with a reader, **characterized in that** the security document also comprises a passive masking element (24) of said antenna, supported by a second part (21, 322) of the document, which can move relative to said first part, said masking element being capable of disturbing the coupling between the transponder and the reader for rendering the reading of the document impossible when said second part is in a predetermined position that corresponds to a closed position of the document.

2. Security document according to Claim 1, in which the passive masking element (24) comprises a thin metallic layer of a given form, arranged in such a way that, when the document is in the closed position, said layer is facing all or part of the area covered by the antenna.

3. Security document according to Claim 2, in which the form of said layer is such that, when the document is in the closed position, said layer is facing all or part of the peripheral region of the area covered by the antenna.

4. Security document according to either of Claims 2 and 3, in which said thin layer is formed from a sheet of metallic material.

5. Security document according to Claim 4, in which said sheet is an aluminum sheet.

6. Security document according to either of Claims 2 and 3, in which said thin layer is formed by means of a screen printed conductive paste.

7. Security document according to one of Claims 2 to 6, in which said thin layer is directly supported by said second part of the document.

8. Security document according to one of Claims 2 to 6, in which said thin layer is formed on a support bonded to said second part of the document.

9. Security document according to Claim 1, in which the passive masking area is formed from a lossy magnetic material.

10. Security document according to Claim 9, in which said material is a ferrite composite.

11. Security document (20) according to one of the preceding claims, formed of a passport type book, with a set of interlinked elements, including a front cover (21), a back cover (22) and one or more movable sheets (23), in which the first part and the second part of the document, respectively supporting the antenna (101) and the passive masking element (24), are formed from two separate elements of the document, such that the reading of the document is made impossible in the closed position of the book.

12. Security document according to Claim 11, in which the antenna and the masking element are respectively supported by each of the covers of the book.

13. Security document according to Claim 11, in which the antenna and the masking element are respectively supported by one of said covers and one of said movable sheets.

14. Security document according to Claim 11, in which the antenna and the masking element are respectively supported by one of the movable sheets and one of the covers or one of said other movable sheets.

15. Security document (30) according to one of Claims 1 to 10, formed of a card (31) and a protective case (32), in which, the antenna (101) of the transponder being supported by said card forming said first element, the passive masking element (24) is supported by the case forming said second element, such that the reading of the card is made impossible when the latter is stored in the case.

16. Security document according to Claim 15, in which the case comprises two flaps (321, 322) that can be folded one over the other, a first flap (321) with a recess (323) in which the card (31) is designed to be inserted, the second flap (322) supporting the passive masking element (24), such that the reading of the card is made impossible when the flaps of the case are folded one over the other.

## Patentansprüche

1. Gesichertes Dokument (20, 30) mit kontaktlosem Chip, das einen Transponder (10) aufweist, der von einem elektronischen Modul (102) gebildet wird, das mit einer Antenne (101) verbunden ist, die auf einer gegebenen Fläche eines ersten Teils (22, 31) des Dokuments angeordnet ist, wobei der Transponder dazu bestimmt ist, mit Hilfe einer elektromagnetischen Fernkopplung mit einem Lesegerät zu kommunizieren, **dadurch gekennzeichnet, dass** das gesicherte Dokument außerdem ein Element (24) zur passiven Abdeckung der Antenne aufweist, das von einem zweiten Teil (21, 322) des Dokuments getragen wird, der bezüglich des ersten Teils beweglich ist, wobei das Abdeckungselement ausgelegt ist, um die Kopplung zwischen dem Transponder und dem Lesegerät zu stören, damit das Lesen des Dokuments in einer vorbestimmten Stellung des zweiten Teils unmöglich wird, die einer so genannten geschlossenen Stellung des Dokuments entspricht.

2. Gesichertes Dokument nach Anspruch 1, bei dem das passive Abdeckungselement (24) eine dünne Metallschicht von gegebener Form aufweist, die so angeordnet ist, dass die Schicht sich in der geschlossenen Stellung des Dokuments vor der ganzen oder einem Teil der von der Antenne bedeckten Fläche befindet.

3. Gesichertes Dokument nach Anspruch 2, bei dem die Form der Schicht so ist, dass sie sich in der geschlossenen Stellung des Dokuments vor der ganzen oder einem Teil der Umfangszone der von der Antenne bedeckten Fläche befindet.

4. Gesichertes Dokument nach einem der Ansprüche 2 oder 3, bei dem die dünne Schicht ausgehend von einer Folie aus metallischem Werkstoff gebildet wird.

5. Gesichertes Dokument nach Anspruch 4, bei dem die Folie eine Aluminiumfolie ist.

6. Gesichertes Dokument nach einem der Ansprüche 2 oder 3, bei dem die dünne Schicht mit Hilfe einer leitenden Siebdruckpaste gebildet wird.

7. Gesichertes Dokument nach einem der Ansprüche 2 bis 6, bei dem die dünne Schicht direkt vom zweiten Teil des Dokuments getragen wird.

8. Gesichertes Dokument nach einem der Ansprüche 2 bis 6, bei dem die dünne Schicht auf einem Träger gebildet wird, der auf den zweiten Teil des Dokuments geklebt ist.

9. Gesichertes Dokument nach Anspruch 1, bei dem das passive Abdeckungselement ausgehend von einem Magnetmaterial mit Verlusten gebildet wird.

10. Gesichertes Dokument nach Anspruch 9, bei dem das Material ein Ferrit-Verbundmaterial ist.

11. Gesichertes Dokument (20) nach einem der vorhergehenden Ansprüche, das von einem Buch vom Typ Reisepass gebildet wird, mit einem Satz von miteinander verbundenen Elementen, darunter ein rückseitiges Deckblatt (21), ein vorderseitiges Deckblatt (22) und eines oder mehrere bewegliche Blätter (23), wobei der erste Teil und der zweite Teil des Dokuments, die die Antenne (101) bzw. das passive Abdeckungselement (24) tragen, von zwei unterschiedlichen Elementen des Dokuments gebildet werden, so dass das Lesen des Dokuments in der geschlossenen Stellung des Buchs unmöglich gemacht wird.

12. Gesichertes Dokument nach Anspruch 11, bei dem die Antenne und das Abdeckungselement je von einem der Deckblätter des Buchs getragen werden.

13. Gesichertes Dokument nach Anspruch 11, bei dem die Antenne und das Abdeckungselement von einem der Deckblätter bzw. einem der beweglichen Blätter getragen werden.

14. Gesichertes Dokument nach Anspruch 11, bei dem die Antenne und das Abdeckungselement von einem der beweglichen Blätter bzw. einem der Deckblätter oder einem der anderen beweglichen Blätter getragen werden.

15. Gesichertes Dokument (30) nach einem der Ansprüche 1 bis 10, das aus einer Karte (31) und einer Schutzhülle (32) besteht, bei dem, während die Antenne (101) des Transponders von der das erste Element bildenden Karte getragen wird, das passive Abdeckungselement (24) von der das zweite Element bildenden Hülle getragen wird, so dass das Lesen der Karte unmöglich gemacht wird, wenn diese in der Hülle angeordnet ist.

16. Gesichertes Dokument nach Anspruch 15, bei dem die Hülle zwei Klappseiten (321, 322) aufweist, die aufeinander umklappbar sind, eine erste Klappseite (321) mit einem Abteil (323), in das die Karte (31) eingeführt werden soll, während die zweite Klappseite (322) das passive Abdeckungselement (24) trägt, so dass das Lesen der Karte unmöglich gemacht wird, wenn die Klappseiten der Hülle aufeinander umgeklappt sind.
